Europäisches Patentamt

European Patent Office

Office européen des brevets

(11) Numéro de publication: **0 143 028**
**A1**

# (12) DEMANDE DE BREVET EUROPEEN

(21) Numéro de dépôt: 84402041.2

(22) Date de dépôt: 11.10.84

(51) Int. Cl.⁴: **G 05 D 23/275**
**F 24 H 9/20**

(30) Priorité: 12.10.83 FR 8316196

(43) Date de publication de la demande:
29.05.85 Bulletin 85/22

(84) Etats contractants désignés:
BE CH DE FR IT LI NL

(71) Demandeur: COMPAGNIE EUROPEENNE POUR
L'EQUIPEMENT MENAGER "CEPEM" Société anonyme
dite:
12, rue de la Baume
F-75008 Paris(FR)

(72) Inventeur: Thiry, Gérard
THOMSON-CSF SCPI 173, bld Haussmann
F-75379 Paris Cedex 08(FR)

(74) Mandataire: Grynwald, Albert et al,
THOMSON-CSF SCPI 173, Bld Haussmann
F-75379 Paris Cedex 08(FR)

(54) Dispositif perfectionné de régulation de la température d'un fluide contenu dans une enceinte.

(57) Il comporte d'une part un thermostat de régulation comprenant une canne plongeante (4) et d'autre part un système de sécurité thermique muni d'un élément sensible.

Le dispositif (2) est situé au niveau d'une portion (1) thermiquement isolante de l'enceinte, et se caractérise en ce qu'il comporte un élément métallique (7) qui traverse ladite portion isolante (1) et qui est en contact avec l'élément sensible ou son support (6) et le fluide, afin d'assurer un bon transfert thermique entre l'intérieur de l'enceinte et l'élément sensible.

Dans un mode de réalisation, l'élément métallique est un godet (7) qui se remplit de fluide pour assurer le transfert.

FIG.1

# DISPOSITIF PERFECTIONNE DE REGULATION
## DE LA TEMPERATURE
### D'UN FLUIDE CONTENU DANS UNE ENCEINTE.

L'invention concerne un dispositif de régulation de la température d'un fluide contenu dans une enceinte.

Elle s'applique en particulier aux dispositifs du type comportant, d'une part un thermostat de régulation de la température dudit fluide comprenant une canne plongeante, et d'autre part un système de sécurité thermique muni d'un élément sensible à la température.

Un tel dispositif peut être utilisé en particulier pour la régulation de la température de l'eau dans les chauffe-eau électriques.

La présence, dans le dispositif de régulation, d'un système de sécurité thermique, indépendant du thermostat de régulation est imposée par les normes de sécurité. A titre d'exemple, ce système peut être réglé de manière à couper, en cas de défaillance du thermostat, l'alimentation électrique lorsque la température du fluide atteint une valeur supérieure de 5 à 10°C à la température maximale définie pour ledit thermostat.

Pour que le système de sécurité fonctionne de manière sure, il est nécessaire que la température du fluide soit transmise le plus fidèlement possible à l'élément sensible, éventuellement par l'intermédiaire de la platine du boîtier renfermant le système.

La paroi de l'enceinte contenant le fluide étant métallique, la condition est réalisée en général en plaquant le dispositif de régulation sur ladite paroi, ou le plus près possible, l'élément sensible ou son support étant en contact avec cette paroi métallique.

Toutefois, selon une telle disposition, il s'ensuit une déperdition de calories due à cette partie de la surface de l'enceinte qui n'est pas calorifugée. Par ailleurs, pour des raisons d'encombrement par exemple, quand le dispositif est placé sur la bride qui porte l'élément chauffant, on constate que ledit dispositif n'est pas toujours au contact de la paroi métallique.

Actuellement, pour des raisons d'économie d'énergie, il est nécessaire d'isoler de plus en plus les enceintes renfermant des fluides chauds ; l'utilisation de plus en plus fréquente de matériaux isolants pour réaliser les enveloppes des appareils occasionne des difficultés de fonctionnement du dispositif de sécurité classique, car le transfert de la température du fluide à l'élément sensible n'est plus possible dans de bonnes conditions.

La réalisation des brides d'éléments chauffants en matériaux isolants conduit également aux mêmes difficultés.

On est alors obligé de prévoir des dispositifs de régulation comportant deux cannes plongeantes : l'une associée au thermostat, l'autre au système de sécurité, ce qui entraine pratiquement un doublement du prix du dispositif.

La présente invention a pour but de remédier aux inconvénients précités.

Elle a pour objet un dispositif de régulation de la température d'un fluide contenu dans une enceinte, comportant un thermostat de régulation à canne plongeante et un système de sécurité thermique muni d'un élément sensible, ledit dispositif étant situé à proximité d'une portion thermiquement isolante de ladite enceinte, à l'extérieur de l'enceinte et étant caractérisé en ce qu'il comporte un élément métallique qui traverse ladite portion isolante par un orifice prévu dans celle-ci, et qui est en contact, d'une part avec le fluide, et d'autre part avec l'élément sensible ou son support.

Ainsi, cet élément métallique assure une bonne transmission des calories du fluide au voisinage de la portion isolante (paroi ou bride) vers l'élément sensible. Il peut revêtir diverses formes.

Par exemple à titre illustratif et nullement limitatif, l'élément métallique peut être un cylindre plein, un godet, une capsule.

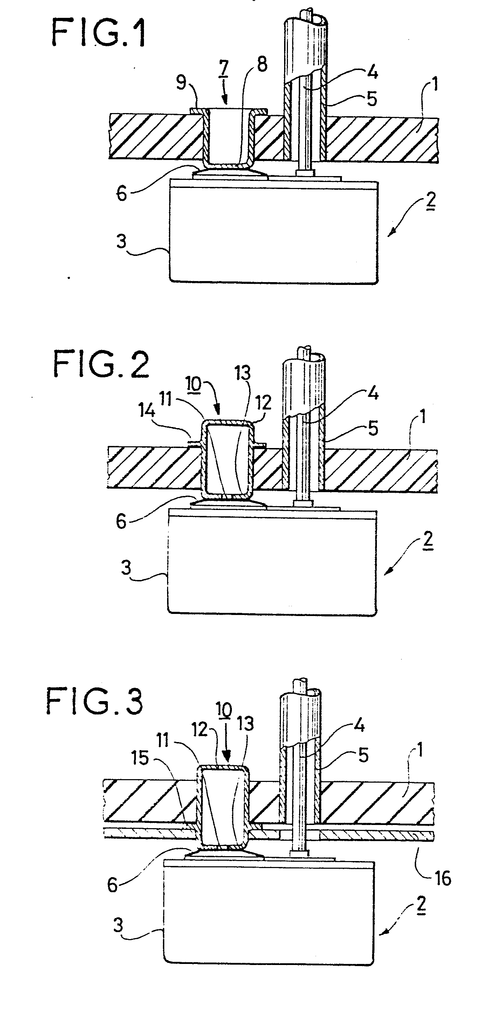

D'autres caractéristiques de l'invention ressortiront de la description qui va suivre et du dessin annexé dans lequel les figures 1 à 3 représentent très schématiquement trois modes d'exécution d'un dispositif conforme à l'invention.

Sur ces figures, la référence 1 désigne une portion isolante de l'enceinte, qui peut être soit constituée par la paroi elle-même, soit par une bride isolante, supportant éventuellement les éléments chauffants.

La référence 2 désigne un dispositif de régulation thermique de la température du fluide contenu dans l'enceinte.

Il s'agit d'un dispositif de type usuel, dont le boîtier est désigné par la référence 3, et qui comprend, d'une part un thermostat de régulation muni d'une canne plongeante 4 disposée à l'intérieur d'une gaine 5, et d'autre part un système de sécurité comprenant un_-élément thermiquement sensible.

La référence 6 désigne l'élément sensible ou son support.

Dans le mode de réalisation représenté à la figure 1, l'élément métallique est un godet métallique 7 dont le fond 8 porte sur l'élément sensible 6 (ou son support) et dont l'extrémité ouverte est dirigée vers l'intérieur de l'enceinte.

Le godet 7 traverse la paroi 1 isolante par un orifice dans lequel il est emmanché en force, de façon que l'étanchéité soit conservée.

Dans le mode de réalisation représenté, ce godet comporte à son extrémité ouverte une collerette 9 prenant appui sur la surface interne de la paroi 1 autour de l'orifice dans lequel il est engagé. La collerette permet un bon maintien du godet.

La profondeur du godet 7 est sensiblement égale à l'épaisseur de ladite paroi 1.

Ainsi, le fluide contenu dans l'enceinte vient remplir le godet métallique et il existe donc un bon transfert thermique du fluide vers l'élément sensible du système de sécurité.

Dans les modes de réalisation représentés aux figures 2 et 3, l'élément métallique est une capsule métallique 10 traversant également la paroi grâce à un orifice dans laquelle elle est emmanchée en force.

Cette capsule peut être obturée et renfermer un fluide compressible qui assure alors le transfert thermique.

Elle peut également contenir de l'air et être munie d'un orifice 11 permettant son échappement vers l'extérieur lors de la dilatation.

L'une des extrémités 12 de la capsule 10 est en contact avec le fluide de l'enceinte à surveiller, l'autre 13 étant en contact avec l'élément sensible 6 ou son support.

Pour assurer la bonne tenue de la capsule, il est avantageux de la munir d'une collerette.

Dans le cas de la figure 2, une collerette 14, disposée à l'intérieur de l'enceinte, prend appui sur la paroi 1 autour de l'orifice dans lequel est engagée la capsule.

Dans le cas de la figure 3, où la paroi isolante 1 est en fait une bride isolante et où l'on prévoit une bride de serrage 16 plaquant la bride isolante dans son logement, la capsule 10 est munie d'une collerette 15, disposée à l'extérieur de l'enceinte et qui est maintenue par la bride de serrage 16 contre la paroi isolante 1.

L'élément sensible du système de sécurité peut revêtir plusieurs formes. En particulier, il peut être de type bimétallique ou constitué par un métal ou alliage à mémoire thermique.

Bien entendu l'invention n'est nullement limitée aux modes de réalisation décrits et représentés qui n'ont été donnés qu'à titre d'exemples.

En particulier, on peut sans sortir du cadre de l'invention apporter des modifications de détail, changer certaines dispositions ou remplacer certains moyens par des moyens équivalents.

REVENDICATIONS

1. Dispositif de régulation de la température d'un fluide contenu dans une enceinte, comportant d'une part un thermostat de régulation comprenant une canne plongeante et d'autre part un système de sécurité thermique muni d'un élément sensible, ledit dispositif étant situé à l'extérieur de l'enceinte et à proximité d'une portion (1) thermiquement isolante de ladite enceinte, caractérisé en ce qu'il comporte un élément métallique (7; 10) qui traverse ladite portion isolante (1) par un orifice prévu dans celle-ci, et qui est en contact d'une part avec le fluide et d'autre part avec l'élément sensible ou son support (6), afin d'assurer un bon transfert thermique de l'intérieur de l'enceinte vers l'élément sensible ou son support.

2. Dispositif selon la revendication 1, caractérisé par le fait que l'élément métallique est un godet (7), dont le fond (8) est en contact avec l'élément sensible ou son support (6), et dont l'extrémité ouverte est dirigée vers l'intérieur de l'enceinte.

3. Dispositif selon la revendication 2, caractérisé en ce que l'extrémité ouverte du godet (7) est entourée par une collerette (9) prenant appui sur la surface interne de la portion isolante (1), autour de l'orifice dans lequel le godet est engagé.

4. Dispositif selon la revendication 1, caractérisé en ce que l'élément métallique est un cylindre plein.

5. Dispositif selon la revendication 1, caractérisé en ce que la traversée métallique est constituée par une capsule (10) dont l'une des extrémités (12) est en contact avec le fluide de l'enceinte et l'autre (13) avec l'élément sensible ou son support (6).

6. Dispositif selon la revendication 5, caractérisé en ce que la capsule (10) renferme un fluide compressible.

7. Dispositif selon la revendication 5, caractérisé par le fait que la capsule (10) renferme de l'air, un orifice (11) étant prévu pour son échappement.

8. Dispositif selon l'une des revendications 5 à 7, caractérisé en ce que la capsule comporte une collerette (14; 15) venant s'appliquer contre la surface de la portion isolante (1), autour de l'orifice dans lequel elle est engagée.

9. Dispositif selon la revendication 8, caractérisé en ce que ladite collerette (14) est à l'intérieur de l'enceinte.

10. Dispositif selon la revendication 8, caractérisé par le fait que ladite collerette (15) est située à l'extérieur de l'enceinte et est serrée contre la portion isolante (1) au moyen d'une bride de serrage (16).

11. Dispositif selon l'une des revendication 1 à 10, caractérisé en ce que l'élément métallique est emmanché à force au travers de l'orifice prévu dans ladite portion isolante (1).

FIG.1

FIG.2

FIG.3

**0143028**

Numéro de la demande

## RAPPORT DE RECHERCHE EUROPEENNE

Office européen
des brevets

EP  84 40 2041

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 972 887  (J. GERMANY) <br> * colonne 1, ligne 50 - colonne 2, ligne 35; figures 1,3 * | 1 | G 05 D  23/275 <br> F 24 H  9/20 |
| | --- | | |
| A | FR-A-2 232 793  (INTER CONTROL HERMANN KÖHLER ELEKTRIK) <br> * page 1, ligne 33 - page 2, ligne 3; figures 1,2 * | 1 | |
| | --- | | |
| A | US-A-3 149 782  (R. GRAYSON) <br> * colonne 1, ligne 63 - colonne 2, ligne 57; figures 1,3 * | 1,3 | |
| | --- | | |
| A | US-A-2 849 587  (T. SULLIVAN) <br> * colonne 1, ligne 63 - colonne 3, ligne 26; figures 1,4 * | 6 | |
| | --- | | **DOMAINES TECHNIQUES RECHERCHES (Int. Cl.4)** |
| A | GB-A- 880 110  (AB SVENSKA MASKINVERKEN) <br> * page 2, lignes 19-64; figure 2 * | 1 | F 24 H <br> G 05 D <br> H 05 B |
| | ----- | | |

Le présent rapport de recherche a été établi pour toutes les revendications

| Lieu de la recherche | Date d'achèvement de la recherche | Examinateur |
|---|---|---|
| LA HAYE | 18-01-1985 | HELOT H.V. |